# EUROPÄISCHE PATENTSCHRIFT

(11) **EP 0 445 496 B1**
(45) Veröffentlichungstag und Bekanntmachung des Hinweises auf die Patenterteilung: **18.08.1993**
(21) Anmeldenummer: 90890064.0
(22) Anmeldetag: 07.03.1990
(51) Int. Cl.: B65G 59/02, H01M 10/14

(54) **Vorrichtung zum Vereinzeln von plattenförmigen Gegenständen, insbesondere Akkumulatorplatten**
Separating device for platelike articles, in particular accumulator plates
Dispositif séparateur pour objects en forme de plaques, notamment plaques d'accumulateur

(43) Veröffentlichungstag der Anmeldung: 11.09.1991
(73) Patentinhaber: ELBAK Batteriewerke Gesellschaft m.b.H., A-8055 Graz-Puntigam Steiermark (AT)
(72) Erfinder: Puhm, Helmut, A-8010 Graz (Steiermark) (AT); Schwetz, Anton, A-8273 Ebersdorf (Steiermark) (AT); Kirstein, Wilhelm H., A-1190 Wien (AT); Veit, Günter, W-2081 Haelau (DE)
(74) Vertreter: Beer, Manfred, Dipl.-Ing.

(56) Entgegenhaltungen:
- DE-A- 3 150 159
- DE-C- 1 249 769
- GB-A- 949 881
- GB-A- 1 101 715
- GB-A- 2 092 117
- PATENT ABSTRACTS OF JAPAN vol. 13, no. 226 (E-763)(3574) 25 Mai 1989

## Beschreibung

Die Erfindung betrifft eine Vorrichtung zum Vereinzeln von plattenförmigen Gegenständen, insbesondere von Akkumulatorplatten mit einem Magazin, in dem die zu vereinzelnden Platten übereinandergestapelt sind, mit einer dem Magazin zugeordneten Hebeeinrichtung für die Platten, welche die dem Magazin von unten zugeführten Platten im Magazin nach oben zu einer Entnahmestelle anhebt, mit einer dem oberen Ende des Magazins zugeordneten Entnahmevorrichtung, welche die jeweils oberste Platte des im Magazin enthaltenen Plattenstapels einzeln aus dem Magazin ausschiebt und an eine Vorrichtung zum Zuführen der entnommenen Platten zur weiteren Bearbeitung übergibt, wobei die Hebeeinrichtung zwei unabhängig voneinander heb- bzw. senkbare Hebemittel aufweist, wobei eines der Hebemittel nach außen verschwenkbar gelagerte Hebeglieder aufweist, die nach unten weisende Schrägflächen aufweisen, an welchen die jeweils oberste Platte eines nachfolgenden Plattenpaketes angreift, um die Hebeglieder nach außen zu drücken.

Zur Aufnahme plattenförmiger Gegenstände, insbesondere Akkumulatorenplatten, sind die verschiedensten Ausführungsformen von Magazinen vorgeschlagen worden. Zweck dieser Magazine ist es, einen Stapel plattenförmiger Gegenstände bereit zu halten, dem Platten einzeln entnommen werden können.

Neben Vertikalmagazinen, wie sie aus der DE-OS 23 08 946, der DE-PS 10 82 950, der AT-PS 241 565, der AT-PS 329 124 und der AT-PS 352 197 bekannt sind und bei welchen die plattenförmigen Gegenstände am unteren Ende des Magazins entnommen werden, sind auch andere Ausführungsformen von Magazinen bekannt. So beschreibt die AT-PS 379 786 eine Vorrichtung zum Vereinzeln von Platten aus Stapeln, die mit zwei durch einen gemeinsamen Antrieb hin- und herbewegbaren Saugköpfen arbeitet, welche abwechselnd von auf beiden Seiten einer Fördervorrichtung vorgesehenen Plattenstapeln vereinzelte Platten aufnehmen und ablegen. Eine ähnliche Vorrichtung ist aus der DE-OS 21 48 532 bekannt.

Aus der DE-PS 935 374 ist eine mit Vakuumsaugern ausgestattete Vorrichtung zum Zusammenbau von Plattensätzen für Akkumulatoren bekannt.

Aus der EP-B-141 806 ist ein Horizontalmagazin für plattenförmige Gegenstände bekannt, dem ein mit einem Vakuumsaugkopf ausgestatteter Greifer einzeln Platten von der Vorderseite des im Horizontalmagazin aufgenommenen Stapels nebeneinanderstehender plattenförmiger Gegenstände entnimmt. Hiezu sind besondere Rückhaltevorrichtungen notwendig, damit der Saugkopf durch seine Saugwirkung nicht mehr als eine Platte entnimmt.

Die bekannten Vorrichtungen zum Vereinzeln von plattenförmigen Gegenständen aus Plattenstapeln arbeiten vergleichsweise langsam, so daß sie für schnell arbeitende Vorrichtungen zum Zusammenbauen von Akkumulatorenplattenstapeln oder für schnell arbeitenden Vorrichtungen zum Einhüllen von Akkumulatorenplatten in Separatoren ("Eintaschmaschinen") nicht hinreichen. Bei modernen Eintaschmaschinen werden Leistungen von über 100 Akkumulatorenplatten pro Minute gefordert. Diese Leistungen können die herkömmlichen Vereinzelungsvorrichtungen (auch Plattenleger genannt) nicht erreichen. Ein besonderes Problem ergibt sich beim Vereinzeln von Akkumulatorenplatten, da diese aus Blei bestehen und daher weich und leicht verformbar sind und überdies große Abmessungstoleranzen haben.

Eine Vorrichtung mit den Merkmalen des einleitenden Teils des unabhängigen Anspruches 1 ist aus der DE-C-1 249 769 bekannt.

Bei dieser bekannten Vorrichtung werden die dem Magazin zugeführten Plattenstapel von einem Hubteller zu einer Hebeeinrichtung angehoben, die zwei nach unten weisende Arme aufweist, an denen verschwenkbare Klinken vorgesehen sind. Diese Hebeeinrichtung wird schrittweise angehoben und die jeweils oberste Platte des Plattenstapels in der Hebeeinrichtung von einer Klinke seitlich ausgeschoben, wobei die unter der auszuschiebenden Platte angeordnete Platte von einer Rückhaltevorrichtung zurückgehalten wird.

Die an den Armen der Hebeeinrichtung der DE-C-1 249 769 vorgesehenen, verschwenkbaren Klinken können nur gemeinsam auf- und abbewegt werden.

Bei der Vorrichtung gemäß dem Dokument DE-C-1 249 769 ist vorgesehen, daß nach dem Ausschieben der letzten Platte des in der Hebeeinrichtung enthaltenen Plattenstapels die Hebeeinrichtung abgesenkt wird, um weitere Platten aufzunehmen. Hiezu wird ein Plattenstapel vom Hubteller von unten her in die Hebeeinrichtung eingeschoben, wie dies in Spalte 6 der DE-C-1 249 769 ab Zeile 19 beschrieben ist.

Die durch die Konstruktion der Vorrichtung gemäß dem Dokument DE-C-1 249 769 bedingte Arbeitsweise ergibt Unterbrechungen beim Vereinzeln von Platten immer dann, wenn der Hebeeinrichtung ein neuer Plattenstapel zugeführt werden muß.

Der Erfindung liegt die Aufgabe zugrunde, eine Vorrichtung zum Vereinzeln von plattenförmigen Gegenständen der eingangs genannten Gattung anzugeben mit der auch weiche, leicht verformbare und Abmessungstoleranzen aufweisende plattenförmige Gegenstände, wie Akkumulatorenplatten, mit hoher Leistung und zuverlässig vereinzelt werden können.

Gelöst wird diese Aufgabe gemäß der Erfindung dadurch, daß die Hebeglieder beider Hebemittel der Hebevorrichtung nach außen verschwenkbar gelagert sind und nach unten weisende Schrägflächen aufweisen, daß die Hebeglieder an Stäben gelagert sind, daß auf zwei gegenüberliegenden Seiten des Magazins je drei nebeneinander angeordnete Stäbe vorgesehen sind, wobei jeweils zwei äußere Stäbe auf einer Seite und der mittlere Stab auf der gegenüberliegenden Seite des Magazins mit einer von zwei voneinander unabhängigen Betätigungsvorrichtungen verbunden sind.

Aufgrund der Konstruktion der erfindungsgemäßen Vorrichtung können die Platten dem Magazin in Form von Paketen aus Platten zugeführt und am oberen Ende des Magazins einzeln entnommen werden. Durch die Entnahme vom oberen Ende wirkt sich das Gewicht des Plattenstapels nicht nachteilig auf den Entnahmevorgang aus.

Da die Hebevorrichtung bei der Erfindung wenigstens zwei voneinander unabhängig betätigte Hebeglieder aufweist, können Plattenpakete ohne Behinderung und Störung des Entnahmevorganges am oberen Ende des Magazins von unten her nachgeschoben werden.

Die bei der Erfindung nach außen verschwenkbar gelagerten Hebeglieder werden-beim Nachschieben eines Plattenpaketes von der jeweils obersten Platte desselben nach außen verschwenkt, so daß die Plattenstapel im Magazin von den Hebegliedern getragen werden, die das nächste Plattenpaket nachgeschoben haben, und die Hebeglieder, welche zuvor das oberste Plattenpaket hielten, nach unten bewegt und zur Zuführung eines weiteren Plattenpaketes bereit gestellt werden können. Dieses Verschwenken der Hebenglieder erfolgt besonders problemlos, weil die Hebeglieder nach unten weisende Schrägflächen aufweisen, an welchen die jeweils oberste Platte eines nachfolgenden Plattenpaketes angreift, um die Hebeglieder nach außen zu drücken.

In einer praktischen Ausführungsform der Erfindung ist vorgesehen, daß als Betätigungsvorrichtungen zwei Spindeltriebe vorgesehen sind.

Die erfindungsgemäß vorgeschlagene Anordnung der Stäbe ergibt eine räumlich günstige Anordnung, wobei jedes Plattenpaket im Magazin von drei Hebegliedern gehalten wird, so daß auch beim Übergeben eines Plattenstapels kein Verkanten desselben zu befürchten ist.

Eine besonders rasch arbeitende Ausführungsform der Erfindung ergibt sich, wenn die Entnahmevorrichtung wenigstens einen Schubfinger aufweist, der im wesentlichen in der Ebene der obersten Platte hin- und herbewegbar ist. Dabei kann vorgesehen sein, daß der Schubfinger mit einem Kurbeltrieb gekuppelt ist. Bevorzugt ist noch, wenn der Schubfinger mit einem Schwenkarm, der über eine Stange mit dem Kurbeltrieb gekuppelt ist, gelenkig verbunden ist und unter seinem Eigengewicht auf der obersten Platte aufliegt, und daß der Schubfinger an seinem vorderen Ende eine Schulter aufweist, über die er an der zu entnehmenden Platte angreift. Dadurch justiert sich der Schubfinger zur obersten Platte von selbst jeweils richtig aus. Die erfindungsgemäße Ausführung der Entnahmevorrichtung mit dem Schubfinger und der erfindungsgemäß bevorzugte Andruck desselben gewährleisten ein besonders rasches Entnehmen von einzelnen Platten aus dem Plattenstapel.

Eine vorteilhafte Ausgestaltung der Erfindung ist dadurch gekennzeichnet, daß als Rückhaltevorrichtung für die von oben gesehen zweite Platte eine Rückhalteleiste vorgesehen ist, die in der Vorrichtung auf- und abverschiebbar geführt oder verschwenkbar gelagert ist und mit einer Tastrolle, die auf der Oberseite der obersten Platte anliegt, verbunden ist. Bei dieser Ausführungsform brauchen keine eigentlichen Führungskanten, die den Innenraum des Magazins begrenzen, vorgesehen sein, da die der zu entnehmenden Platte nachfolgende Platte, d.h. die zweitoberste Platte, von der Rückhaltevorrichtung gehalten wird, so daß nur die oberste Platte von der Entnahmevorrichtung mit dem Schubfinger seitlich ausgeschoben wird. Durch die Anordnung der Tastrolle stellt sich die Rückhaltevorrichtung automatisch jeweils auf die richtige Lage ein. Dabei ist bevorzugt, daß der Abstand zwischen der unteren horizontalen Tangente an die Tastrolle und der Oberkante der Rückhalteleiste kleiner ist als die Dicke von zwei aufeinanderliegenden Platten.

Eine vorteilhafte Ausführungsform ergibt sich, wenn die Tastrolle und die Rückhalteleiste im wesentlichen gleich breit ausgebildet sind. Bei dieser Ausführungsform ergibt sich der Vorteil, daß die Rückhalteleiste schmal und genau unter der Rolle angeordnet sein kann und durch die Plattenproduktion, insbesondere bei Akkumulatorplatten bedingte Unregelmäßigkeiten, wie beispielsweise ausgebauchte oder geworfene Platten, ausgeglichen werden, da sich der Spalt zwischen der Tastrolle und der Rückhalteleiste genau ausrichten kann und die oberste Platte beim Entnahmevorgang zwischen Tastrolle und Rückhalteleiste ausgeschoben werden kann.

Zur Unterstützung des Entnahmevorganges und zum Weiterbewegen der entnommenen Platten kann vorgesehen sein, daß die Vorrichtung zum Zuführen entnommener Platten zur weiteren Bearbeitung neben dem oberen Ende des Magazins vorgesehene und von beiden Seiten an den Platten her angreifende Transportrollen und in der Entnahmeebene bewegliche Saugköpfe aufweist.

Eine einfache Ausführungsform der Erfindung kennzeichnet sich dadurch, daß die Saugköpfe an einem endlos umlaufenden Förderglied befestigt sind. Dabei kann mit Vorteil vorgesehen sein, daß jeweils zu Gruppen zusammengefaßte Saugköpfe an einer Platte angreifen. Diese Ausführungsform kommt ohne Hin- und Herbewegungsmechanismus für die Vakuumsauger aus, so daß eine weitere Steigerung der Entnahmegeschwindigkeit möglich ist.

Das Beaufschlagen der Saugköpfe mit Unterdruck erfolgt im Rahmen der Erfindung mit Vorteil dadurch, daß dem Förderband, an dem die Saugköpfe befestigt sind, im Bereich, in dem sie Platten aufnehmen, eine Unterdruckkammer zugeordnet ist, und daß die Saugköpfe durch das Förderglied mit der Unterdruckkammer bis zur Abgabestelle in Verbindung stehen. Zum Ablegen der Platten kann erfindungsgemäß vorgesehen sein, daß der Abgabestelle für von den Saugköpfen erfaßte Platten wenigstens eine Überdruckkammer zugeordnet ist und daß die Saugköpfe mit der Überdruckkammer durch das Förderglied in Verbindung stehen. In einer praktischen Ausführungsform kann vorgesehen sein, daß sich die Unterdruckkammer über den gesamten Bereich erstreckt, in dem Saugköpfe Platten halten, daß die wenigstens eine Überdruckkammer innerhalb der Unterdruckkammer engeordnet ist und daß die dem Förderglied zugekehrten Ränder der nach unten offenen Kammern gegenüber dem Förderglied angedichtet sind.

Die Übergabe von entnommenen Platten auf die Saugköpfe gestaltet sich besonders sicher, wenn zwischen dem Bereich, in dem Saugköpfe Platten erfassen und den Transportrollen eine antreibbare Stützrolle für die Platten vorgesehen ist.

Eine weitere Ausgestaltung der Erfindung ist dadurch gekennzeichnet, daß zum Beschicken des Magazins mit Plattenpaketen ein Horizontalförderer vorgesehen ist. Dabei wird für gewöhnlich vorgesehen sein, daß die Abgabestelle des Horizontalförderers im Bereich der Hebeglieder liegt.

Eine besonders vorteilhafte Steuerung der erfindungsgemäßen Vorrichtung ergibt sich, wenn am oberen Ende des Magazins ein die Anwesenheit einer Platte erfassender Sensor vorgesehen ist, der den Antrieb für die Hebeglieder so steuert, daß nach der Entnahme einer Platte vom Plattenstapel durch die Entnahmevorrichtung die den obersten Plattenstapel haltenden Hebeglieder um einen einer Plattenstärke entsprechenden Schritt weiter angehoben werden, so daß die jeweils oberste Platte in der Entnahmeposition ist.

Das Zuführen der vereinzelten Platten zur weiteren Bearbeitung erfolgt im Rahmen der Erfindung mit Vorteil dadurch, daß unterhalb der Abgabestelle der Vorrichtung zum Zuführen von Platten zur weiteren Bearbeitung ein Linearförderer für vereinzelte Platten vorgesehen ist.

Weitere Einzelheiten und Merkmale der Erfindung ergeben sich aus der nachstehenden Beschreibung der in der Zeichnung teils schematisch wiedergegebenen Ausführungsform.

Es zeigt:
Fig. 1 eine Vereinzelungsvorrichtung in Seitenansicht bzw. im Schnitt längs der Linie C-D in Fig. 2 und
Fig. 2 die Vorrichtung aus Fig. 1 in Draufsicht bzw. im Schnitt längs der Linie A-B in Fig. 1.

Die Vorrichtung zum Vereinzeln von plattenförmigen Gegenständen 30 weist ein Magazin 31 auf, das mit einer Hebeeinrichtung 32 für die Platten 30 ausgerüstet ist. Dem oberen Ende 33 des Magazins 31 ist eine Entnahmevorrichtung 34 zugeordnet, welche die jeweils oberste Platte 30 eines im Magazin 31 gehaltenen Plattenstapels 15 seitlich ausschiebt und an eine Vorrichtung 35 zum Zuführen der entnommenen Platten 30 zur weiteren Bearbeitung übergibt. Die Vorrichtung 35 übergibt im gezeigten Ausführungsbeispiel die entnommenen Platten 30 auf einen Linearförderer 27.

Zum Beschicken des Magazins 31 mit Plattenpaketen 3 ist ein mit zwei Transportketten 2 ausgestatteter Horizontalförderer 36 vorgesehen.

Das Magazin 31 wird von zwei Gruppen von Stäben 4, 6 und 8 bzw. 5, 7 und 9 gebildet. Jeder der Stäbe 4 bis 9 trägt an seinem oberen Ende verschwenkbar gelagert ein Hebeglied 14, das eine nach unten weisende Schrägfläche 37 besitzt und auf dessen Oberseite der Plattenstapel 15 bzw. ein Plattenpaket 3 aufliegt.

Um die Hebeglieder 14 anheben zu können, sind die Stäbe 4, 6 und 8 der einen Gruppe mit einer Platte 10 verbunden, die durch Verdrehen einer Spindel 12 angehoben bzw. abgesenkt werden kann.

Die Stäbe 5, 7 und 9 der zweiten Gruppe sind mit einer Platte 11 verbunden, die durch Verdrehen einer Spindel 13 angehoben und abgesenkt werden kann. Auf diese Weise können die Hebeglieder 14 der von den Stäben 4, 6, 8 gebildeten Gruppe unabhängig von den Hebegliedern 14 der anderen von den anderen Stäben 5, 7, 9 gebildeten Gruppe angehoben bzw. abgesenkt werden.

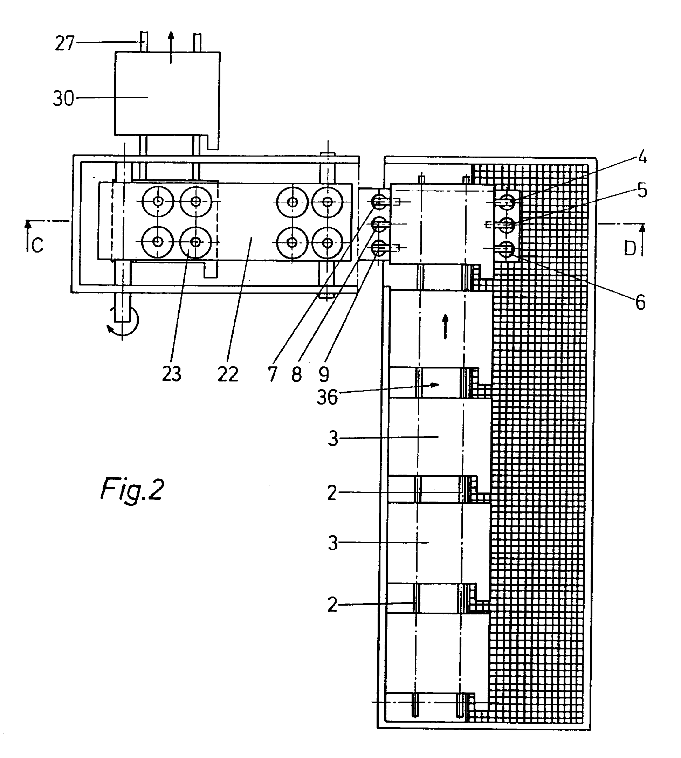

Aus Fig. 2 ist noch ersichtlich, daß die Stäbe 4 bis 9 jeder der zwei Gruppen in den Eckpunkten eines Dreieckes angeordnet sind, wobei jeweils drei Stäbe 4, 5, 6 auf der einen und drei Stäbe 7, 8, 9 auf der anderen von zwei einander gegenüberliegenden Seiten des Magazins 31 vorgesehen sind. Dabei gehören die beiden äußeren Stäbe der einen Seite und der mittlere Stab auf der gegenüberliegenden Seite jeweils zu einer Gruppe.

Die Entnahmevorrichtung 34 am oberen Ende 33 des Magazins 31 weist einen Schubfinger 19 auf, der mit einem Schwenkarm 18, der seinerseits über eine Stange 17 mit einem Kurbeltrieb 16 gekuppelt ist, hin- und herbwegbar ist (Pfeil 38). Der Schubfinger 19 liegt unter seinem Eigengewicht auf der obersten Platte 30 des Plattenstapels 15 auf und besitzt an seinem vorderen Ende eine Schulter 39, die beim Entnahmehub an der dem Schubfinger 19 zugekehrten Kante der obersten Platte 30 des Plattenstapels 15 angreift.

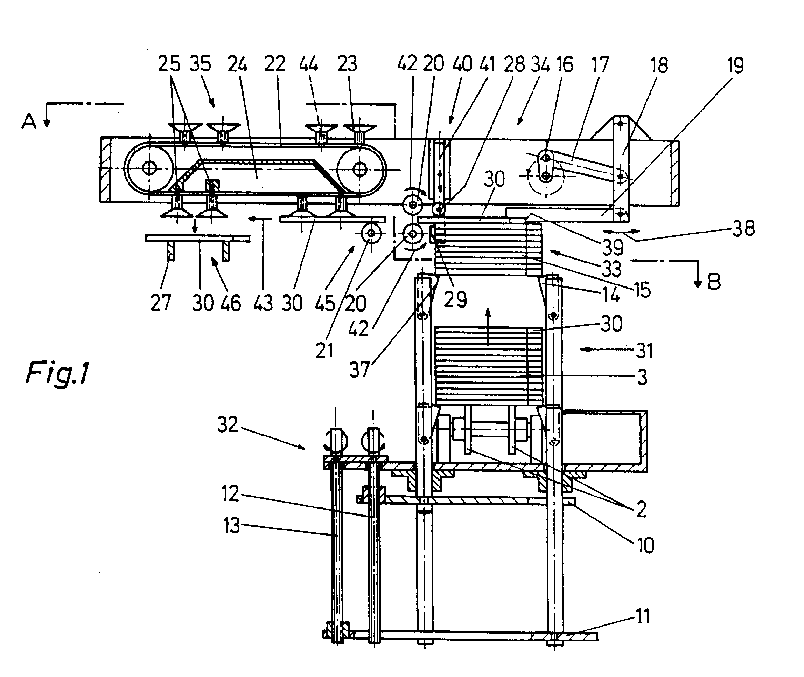

Die Entnahmevorrichtung 34 besitzt weiters eine Rückhalteeinrichtung 40, die aus einer vertikal geführten Tastrolle 28 und einer mit dieser verbundenen Rückhalteleiste 29 besteht. Die Tastrolle 28 liegt auf der Oberseite der jeweils obersten Platte 30 des Plattenstapels 15 im Magazin 31 auf. Die Rückhalteleiste 29 ist mit der Führungsleiste 41 für die Tastrolle 28 so verbunden, daß zwischen der unteren horizontalen Tangente an die Tastrolle 28 und der Oberkante der Rückhalteleiste 29 ein Abstand besteht, der etwas kleiner ist, als die Stärke zweier Platten. Weiters sind die Tastrolle 28 und die Rückhalteleiste 29, quer zur Bildebene der Fig. 1 gesehen, schmal ausgebildet.

Die Vorrichtung 35 zum Zuführen dem Magazin 31 zur Seite hin entnommener Platten 30 besitzt ein unmittelbar neben dem oberen Ende 33 des Plattenstapels 15 vorgesehenes Paar Transportrollen 20, die in Richtung der Pfeile 42 drehangetrieben sind und die vom Schubfinger 19 entnommene Platten 30, von einer frei drehbaren oder angetriebenen Stützrolle 21 abgestützt weiterbefördern. Die von den Transportrollen 20 weiterbeförderten Platten 30 werden von Saugköpfen 23 erfaßt und in Richtung des Pfeiles 43 weiterbewegt.

Die Saugköpfe 23 sind zu Gruppen zu jeweils vier an einem Endlosförderglied 22, das beispielsweise als bandförmiger Zahnriemen ausgebildet ist, befestigt. Vom Hohlraum der Saugköpfe 23 gehen Bohrungen 44 aus, die sich durch den Zahnriemen 22 erstrecken.

Im gezeigten Ausführungsbeispiel sind am Zahnriemen 22 vier Gruppen zu je vier Saugköpfen 23 vorgesehen.

Innerhalb des Zahnriemens 22 ist eine Unterdruckkammer 24 vorgesehen, die zum Zahnriemen 22 hin offen ist und deren Ränder gegenüber dem Zahnriemen 22 angedichtet sind. Durch die Bohrungen 44 werden die Saugköpfe 23 mit Unterdruck beaufschlagt, solange sich die Mündungen der Bohrungen 44 im Bereich der Unterdruckkammer befinden. So wird ein plattenförmiger Gegenstand 30 ergriffen, wenn dieser von den Transportrollen 20 in den Bereich 45 bewegt worden ist.

Im Bereich 46, d.h. oberhalb des Linearförderers 27, ist in der Unterdruckkammer 24 ein Paar von Überdruckkammern 25 vorgesehen, die voneinander in einem dem Abstand der Saugköpfe 23 bzw. der Bohrungen 44 voneinander entsprechenden Abstand angeordnet sind. Durch die Überdruckkammer 25, welche die Form von länglichen Düsen besitzt, werden die Saugköpfe 23 im Bereich 46 mit Überdruck beaufschlagt, so daß die bis dahin von den Saugköpfen 23 gehaltene Platte 30 auf den Linearförderer 27 abgelegt wird.

Die soeben beschriebene Vorrichtung arbeitet wie folgt:
Plattenpakete 3 werden von Hand aus oder mit Hilfe eines Roboters auf die Transportketten 2 des Horizontalförderers 36 aufgelegt. Die Plattenpakete 3 werden schrittweise zum unteren Ende des Magazins 31 zugeführt. Dort wird ein zugeführtes Plattenpaket 3 von einer Gruppe der Hebeeinrichtungen, die von den Stäben 5, 7, 9 bzw. 4, 6, 8 und den Hebegliedern 14 gebildet werden, erfaßt und angehoben, wobei das Plattenpaket 3 über seine unterste Platte 30 auf drei Hebegliedern 14 aufliegt.

In der in Fig. 1 gezeigten Phase wird ein Plattenpaket 3 von den Hebegliedern 14 an den Stangen 5, 7 und 9 erfaßt, wogegen die Hebeglieder 14 an den Stangen 4, 6 und 8 den Plattenstapel 15 in der Entnahmeposition am oberen Ende 33 des Magazins 31 halten.

Nach Entnahme der obersten Platte 30 aus dem Plattenstapel 15 wird durch eine Oberkantensteuerung der Plattenstapel 15 durch Heben der Stäbe 4, 6 und 8 (bzw. wenn die andere Gruppe der Stäbe 5, 7 und 9 wirksam wird) wieder in die Entnahme- bzw. Ausschiebeposition angehoben.

Weiters wird die Platte 11 mit den Stäben 5, 7 und 9 durch Drehen der Spindel 13 angehoben und im Zuge der Aufwärtsbewegung des Plattenpaketes 3 werden die Hebeglieder 14 an den Enden der Stäbe 4, 6 und 8 an der obersten Platte 30 nach außen gedrückt, so daß das Plattenpaket 3 Teil des Plattenstapels 15 wird, indem es an diesen unten anschließt. Durch einen Schaltimpuls des Hebegliedes 14 auf dem Stab 8 übernimmt nun die Spindel 13 die Oberkantensteuerung, wobei in der Zwischenzeit die Stäbe 4, 6 und 8 abgesenkt werden können, um ein vom Horizontalförderer 36 zwischenzeitlich nachgeschobenes Plattenpaket 3 vom Horizontalförderer 6 bzw. dessen Förderketten 2 abzuheben.

Der lose, auf dem Plattenstapel 15 von oben her aufliegende Schubfinger 19 paßt sich, da er frei verschwenkbar ist, den kleinen Höhenunterschieden zwischen den Hubschaltimpulsen und ungenauen Platten 30 an. Ein kurzer Hub des Schubfingers 19 genügt, um die oberste Platte 30 für den Weitertransport zwischen das Rollenpaar 20 zu schieben, wobei die Rückhalteleiste 29 das durch Reibung oder Klebung zwischen den Platten bewirkte Mitrutschen der darunter liegenden Platte 30 verhindert. Da die Rückhalteleiste 29 mit der Tastrolle 28, die auf dem Plattenstapel 15 von oben aufliegt über deren Führung 41 starr verbunden ist, macht sie die kleinen senkrechten Bewegungen des Plattenstapels 15 mit und der Schlitz zwischen der Rückhalteleiste 29 und der Tastrolle 28 bleibt immer gleich und orientiert sich immer richtig gegenüber der obersten Platte 30 aus.

Mit Vorteil ist die Rückhalteleiste 29 schmal ausgebildet und genau unter der Tastrolle 28 angeordnet. Dadurch können durch die Plattenproduktion verursachte unvermeidliche Unregelmäßigkeiten (ausgebauchte und geworfene Platten) ausgeglichen werden, da sich die Lage des Schlitzes zwischen der Rückhalteleiste 29 und der Tastrolle 28 stets der gemessenen Stelle der jeweiligen Situation anpassen kann.

Das Rollenpaar 20 schiebt die vereinzelte Platte 30 mit der Geschwindigkeit aus, mit der sich die Saugköpfe 23 in Richtung des Pfeiles 43 bewegen. Dabei wird noch während des Plattentransportes durch das Rollenpaar 20 die Platte 30 von den Saugköpfen 23 übernommen, sobald die Saugköpfe 23 in den Bereich der Vakuumkammer 24 gelangen.

An der Abgabe- bzw. Abwurfstelle 46 wird durch die Überdruckkammern 25 bzw. Überdruckleitungen oder Druckluftdüsen die Platte 30 genau ausgerichtet abgeworfen und kann mit dem Linearförderer 27 der weiteren Verarbeitung zugeführt werden.

## Patentansprüche

1. Vorrichtung zum Vereinzeln von plattenförmigen Gegenständen (30), insbesondere von Akkumulatorplatten mit einem Magazin (31), in dem die zu vereinzelnden Platten (30) übereinandergestapelt sind, mit einer dem Magazin (31) zugeordneten Hebeeinrichtung (32) für die Platten (30), welche die dem Magazin (31) von unten zugeführten Platten (30) im Magazin (31) nach oben zu einer Entnahmestelle anhebt, mit einer dem oberen Ende (33) des Magazins (31) zugeordneten Entnahmevorrichtung (34), welche die jeweils oberste Platte (30) des im Magazin (31) enthaltenen Plattenstapels (15) einzeln aus dem Magazin (31) ausschiebt und an eine Vorrichtung (35, 27) zum Zuführen der entnommenen Platten (30) zur weiteren Bearbeitung übergibt, wobei die Hebeeinrichtung (32) zwei unabhängig voneinander heb- bzw. senkbare Hebemittel aufweist, wobei eines der Hebemittel nach außen verschwenkbar gelagerte Hebeglieder (14) aufweist, die nach unten weisende Schrägflächen (37) aufweisen, an welchen die jeweils oberste Platte (30) eines nachfolgenden Plattenpaketes (3) angreift, um die Hebeglieder (14) nach außen zu drücken, dadurch gekennzeichnet, daß die Hebeglieder (14) beider Hebemittel der Hebevorrichtung (32) nach außen verschwenkbar gelagert sind und nach unten weisende Schrägflächen (37) aufweisen, daß die Hebeglieder (14) an Stäben (4, 5, 6, 7, 8, 9) gelagert sind, daß auf zwei gegenüberliegenden Seiten des Magazins (31) je drei nebeneinander angeordnete Stäbe (7, 8, 9; 4, 5, 6) vorgesehen sind, wobei jeweils zwei äußere Stäbe (4, 6; 7, 9) auf einer Seite und der mittlere Stab (5; 8) auf der gegenüberliegenden Seite des Magazins (31) mit einer von zwei voneinander unabhängigen Betätigungsvorrichtungen (10, 12; 11, 13) verbunden sind.

2. Vorrichtung nach Anspruch 1, dadurch gekennzeichnet, daß als Betätigungsvorrichtungen zwei Spindeltriebe (12, 13) vorgesehen sind.

3. Vorrichtung nach Anspruch 1 oder 2, dadurch gekennzeichnet, daß die Entnahmevorrichtung (34) wenigstens einen Schubfinger (19) aufweist, der im wesentlichen in der Ebene der obersten Platte (30) hin- und herbewegbar ist.

4. Vorrichtung nach Anspruch 3, dadurch gekennzeichnet, daß der Schubfinger (19) mit einem Kurbeltrieb (16) gekuppelt ist.

5. Vorrichtung nach Anspruch 4, dadurch gekennzeichnet, daß der Schubfinger (19) mit einem Schwenkarm (18), der über eine Stange (17) mit dem Kurbeltrieb (16) gekuppelt ist, gelenkig verbunden ist und unter seinem Eigengewicht auf der obersten Platte (30) aufliegt, und daß der Schubfinger (19) an seinem vorderen Ende eine Schulter (39) aufweist, über die er an der zu entnehmenden Platte (30) angreift.

6. Vorrichtung nach einem der Ansprüche 1 bis 5, dadurch gekennzeichnet, daß als Rückhaltevorrichtung (40) für die von oben gesehen zweite Platte (30) eine Rückhalteleiste (29) vorgesehen ist, die in der Vorrichtung auf- und abverschiebbar geführt oder verschwenkbar gelagert ist und mit einer Tastrolle (28), die auf der Oberseite der obersten Platte (30) anliegt, verbunden ist.

7. Vorrichtung nach Anspruch 5, dadurch gekennzeichnet, daß der Abstand zwischen der unteren horizontalen Tangente an die Tastrolle (28) und der Oberkante der Rückhalteleiste (29) kleiner ist als die Dicke von zwei aufeinanderliegenden Platten (30).

8. Vorrichtung nach Anspruch 6 oder 7, dadurch gekennzeichnet, daß die Tastrolle (28) und die Rückhalteleiste (29) im wesentlichen gleich breit ausgebildet sind.

9. Vorrichtung nach einem der Ansprüche 1 bis 8, dadurch gekennzeichnet, daß die Vorrichtung (35) zum Zuführen entnommener Platten (30) zur weiteren Bearbeitung neben dem oberen Ende (33) des Magazins (31) vorgesehene und von beiden Seiten an den Platten (30) her angreifende Transportrollen (20) und in der Entnahmeebene bewegliche Saugköpfe (23) aufweist.

10. Vorrichtung nach Anspruch 9, dadurch gekennzeichnet, daß die Saugköpfe (23) an einem endlos umlaufenden Förderglied (22) befestigt sind.

11. Vorrichtung nach Anspruch 9 oder 10, dadurch gekennzeichnet, daß jeweils zu Gruppen zusammengefaßte Saugköpfe (23) an einer Platte (30) angreifen.

12. Vorrichtung nach Anspruch 10 oder 11, dadurch gekennzeichnet, daß dem Förderband (22), an dem die Saugköpfe (23) befestigt sind, im Bereich (45), in dem sie Platten (30) aufnehmen, eine Unterdruckkammer (24) zugeordnet ist, und daß die Saugköpfe (23) durch das Förderglied (22) mit der Unterdruckkammer (24) bis zur Abgabestelle in Verbindung stehen.

13. Vorrichtung nach einem der Ansprüche 10 bis 12, dadurch gekennzeichnet, daß der Abgabestelle (46) für von den Saugköpfen (23) erfaßte Platten (30) wenigstens eine Überdruckkammer (25) zugeordnet ist und daß die Saugköpfe (23) mit der Überdruckkammer (25) durch das Förderglied (22) in Verbindung stehen.

14. Vorrichtung nach Anspruch 12 und 13, dadurch gekennzeichnet, daß sich die Unterdruckkammer (24) über den gesamten Bereich erstreckt, in dem Saugköpfe (23) Platten (30) halten, daß die wenigstens eine Überdruckkammer (25) innerhalb der Unterdruckkammer (24) angeordnet ist und daß die dem Förderglied (22) zugekehrten Ränder der nach unten offenen Kammern (24, 25) gegenüber dem Förderglied (22) abgedichtet sind.

15. Vorrichtung nach einem der Ansprüche 9 bis 14, dadurch gekennzeichnet, daß zwischen dem Bereich (45), in dem Saugköpfe (23) Platten (30) erfassen und den Transportrollen (20) eine antreibbare Stützrolle (21) für die Platten (30) vorgesehen ist.

16. Vorrichtung nach einem der Ansprüche 1 bis 15, dadurch gekennzeichnet, daß zum Beschicken des Magazins (31) mit Plattenpaketen (3) ein Horizontalförderer (36, 2) vorgesehen ist.

17. Vorrichtung nach Anspruch 16, dadurch gekennzeichnet, daß die Abgabestelle des Horizontalförderers (36, 2) im Bereich der Hebeglieder (14) liegt.

18. Vorrichtung nach einem der Ansprüche 1 bis 17, dadurch gekennzeichnet, daß am oberen Ende des Magazins (31) ein die Anwesenheit einer Platte (30) erfassender Sensor vorgesehen ist, der den Antrieb (12, 13) für die Hebeglieder (14) so steuert, daß nach der Entnahme einer Platte (30) vom Plattenstapel (15) durch die Entnahmevorrichtung (34) die den Plattenstapel (15) haltenden Hebeglieder (14) um einen einer Plattenstärke entsprechenden Schritt weiter angehoben werden, so daß die jeweils oberste Platte (30) in der Entnahmeposition ist.

19. Vorrichtung nach einem der Ansprüche 1 bis 18, dadurch gekennzeichnet, daß unterhalb der Abgabestelle (46) der Vorrichtung (35) zum Zuführen von Platten (30) zur weiteren Bearbeitung ein Linearförderer (27) für vereinzelte Platten (30) vorgesehen ist.

## Claims

1. Device for single-feeding articles of plate-form (30), especially accumulator plates, with a magazine (31) in which the articles to be single-fed are stacked on top of one another, with a raising device (32) for the plates (30) associated with the magazine (31), which raises the plates (30) fed into the magazine (31) from below up to a take-off location, with a take-off device (34) associated with the upper end of the magazine (31) and which pushes the currently uppermost plate (30) of the plate stack (15) held in the magazine (31) individually out of the magazine (31) and transfers it to a device (35, 27) for feeding on for further processing the plates (30) which have been removed, wherein the raising device (32) comprises two raising means which can be raised and lowered independently of one another, wherein one of the raising means has raising elements (14) which are mounted so that they can be swung outwardly and which have downwardly facing inclined surfaces (37), on which the currently uppermost plate (30) of a following plate pack (3) engages, in order to press the raising elements (14) outwardly, characterized in that the raising elements (14) of both raising means of the raising device (32) are mounted so that they can be swung outwardly and have downwardly facing inclined surfaces (37), in that the raising elements (14) are mounted on rods (4, 5, 6, 7, 8, 9), in that three adjacently arranged rods (7, 8, 9; 4, 5, 6) are provided on each of two opposite sides of the magazine (31), wherein two outer rods (4, 6; 7, 9) on one side and the middle rod ( 5 , 8) on the opposite side of the magazine (31) are connected in each case to one of two operating devices (10, 12; 11, 13) independent of each other.

2. Device according to claim 1, characterized in that two screw drives (12, 13) are provided as operating devices.

3. Device according to claim 1 or 2, characterized in that the take-off device (34) comprises at least one pusher finger (19) which is slidable to and fro substantially in the plane of the uppermost plate (30).

4. Device according to claim 3, characterized in that the pusher finger (19) is coupled to a crank drive (16).

5. Device according to claim 4, characterized in that the pusher finger (19) is pivotally connected to a pivoted arm (18), which is coupled by a rod (17) to the crank drive (16), and bears under its own weight on the uppermost plate (30), and in that the pusher finger (19) has a shoulder (39) at its front end, through which it engages the plate (30) to be removed.

6. Device according to any of claims 1 to 5, characterized in that a retaining strip (29) is provided as a retaining device (40) for the second plate (30) from above, which strip is guided for up and down movement in the device or is pivotally mounted and is connected to a sensing roller (28) which bears on the upper side of the uppermost plate (30).

7. Device according to claim 5, characterized in that the distance between the lower horizontal tangent to the sensing roller (28) and the upper edge of the retaining strip (29) is smaller than the thickness of two plates (30) lying on one another.

8. Device according to claim 6 or 7, characterized in that the sensing roller (28) and the retaining strip (29) are made of substantially the same width.

9. Device according to any of claims 1 to 8, characterized in that the device (35) for feeding the plates (30) which have been taken off for the further processing has beside the upper end (33) of the magazine (31) transport rollers (20) engaging the plates (30) on both sides and suction heads (23) movable into the take-off plane.

10. Device according to claim 9, characterized in that the suction heads (23) are fixed on an endless circulating conveyor element (22).

11. Device according to claim 9 or 10, characterized in that suction heads (23) are combined in groups which engage in each case on one plate (30).

12. Device according to claim 10 or 11, characterized in that a vacuum chamber (24) is associated with the conveyor belt (22) on which the suction heads (23) are fixed in the region (45) in which they receive plates (30), and in that the suction heads (23) are in communication with the vacuum chamber (24) through the conveyor element (22) up to the delivery point.

13. Device according to any of claims 10 to 12, characterized in that at least one excess pressure chamber (25) is associated with the delivery point (46) for plates (30) engaged by the suction heads (23) and in that the suction heads (23) are connected to the excess pressure chamber (25) through the conveyor element (22).

14. Device according to claim 12 and 13, characterized in that the vacuum chamber (24) extends over the whole region in which suction heads (23) hold plates (30), in that the at least one excess pressure chamber (25) is arranged within the vacuum chamber (24) and in that the edges of the downwardly open chambers (24, 25) facing the conveyor element (22) are sealed relative to the conveyor element (22).

15. Device according to any of claims 9 to 14, characterized in that a drivable support roller (21) for the plates (30) is provided between the region (45) in which suction heads (23) engage plates (30) and the transport rollers (20).

16. Device according to any of claims 1 to 15, characterized in that a horizontal conveyor (36, 2) is provided to supply the magazine (31) with plate packs (3).

17. Device according to claim 16, characterized in that the delivery point of the horizontal conveyor (36, 2) lies in the region of the raising elements (14).

18. Device according to any of claims 1 to 17, characterized in that a sensor detecting the presence of a plate (30) is provided at the upper end of the magazine (31) and so controls the drive (12, 13) for the raising elements (14) that, after removal of a plate (30) from the plate stack (15) by the take-off device (34), the raising elements (14) supporting the plate stack (15) are raised further by a step corresponding the thickness of a plate, so that the currently uppermost plate (30) is in the take-off position.

19. Device according to any of claims 1 to 18, characterized in that a linear conveyor (27) for single-fed plates (30) is provided below the delivery point (46) of the device (35) for feeding plates (30) for further processing.

## Revendications

1. Dispositif de dégroupage d'objets en forme de plaque (30), notamment de plaques pour accumulateurs, comportant un magasin (31) dans lequel les plaques (30) à dégrouper sont empilées; un dispositif élévateur (32) pour les plaques (30), conjugué au magasin (31) et levant dans le magasin (31), vers un poste de prélèvement, les plaques (30) amenées par le dessous au magasin (31); un dispositif de prélèvement (34) conjugué à l'extrémité supérieure (33) du magasin (31), sortant individuellement du magasin (31), par translation, la plaque (30) supérieure de la pile (15) de plaques contenue dans le magasin (31), et la transmettant à un dispositif (35, 27) pour mener les plaques prélevées (30) aux opérations d'usinage suivantes, le dispositif élévateur (32) présentant deux moyens élévateurs pouvant être levés ou, selon le cas, descendus indépendamment l'un de l'autre, l'un des moyens élévateurs présentant des organes de levage (14) montés de manière à pouvoir pivoter vers l'extérieur et présentant des surfaces obliques (37) tournées vers le bas contre lesquelles la plaque (30) supérieure d'un paquet de plaques (3) suivant vient s'appliquer afin de pousser les organes de levage (14) vers l'extérieur, caractérisé par le fait que les organes de levage (14) des deux moyens élévateurs du dispositif élévateur (32) sont montés avec possibilité de pivotement vers l'extérieur et présentent des surfaces obliques (37) tournées vers le bas, par le fait que les organes de levage (14) sont montés sur des barres (4, 5, 6, 7, 8, 9), par le fait que sur deux côtés opposés du magasin (31) il est prévu à chaque fois trois barres (7, 8, 9; 4, 5, 6) agencées côte à côte, les deux barres extérieures (4, 6; 7, 9) d'un côté et la barre médiane (5; 8) du côté opposé du magasin (31) étant à chaque fois liées à l'un de deux dispositifs d'actionnement (10, 12; 11, 13) indépendants l'un de l'autre.

2. Dispositif selon revendication 1, caractérisé par le fait que deux entraînements à broche (12, 13) sont prévus comme dispositifs d'actionnement.

3. Dispositif selon revendication 1 ou 2, caractérisé par le fait que le dispositif de prélèvement (34) présente au moins un doigt de poussée (19) qui est déplaçable en va-et-vient sensiblement dans le plan de la plaque supérieure (30).

4. Dispositif selon revendication 3, caractérisé par le fait que le doigt de poussée (19) est couplé à un mécanisme à manivelle (16).

5. Dispositif selon revendication 4, caractérisé par le fait que le doigt de poussée (19) est lié par articulation à un bras pivotant (18) qui est couplé au mécanisme à manivelle (16) par l'intermédiaire d'une bielle (17), et ce doigt s'applique sous son propre poids sur la plaque supérieure (30), et par le fait que le doigt de poussée (19) présente à son extrémité antérieure un épaulement (39) par lequel il attaque la plaque à prélever (30).

6. Dispositif selon l'une des revendications 1 à 5, caractérisé par le fait qu'il est prévu, en tant que dispositif de retenue (40) pour retenir la plaque (30) qui est la deuxième à partir du haut, une tringle de retenue (29) qui est montée dans le dispositif avec possibilité de basculement ou en étant guidée en translation vers le haut et vers le bas et qui est liée à un galet palpeur (28) qui s'applique sur le côté supérieur de la plaque supérieure (30).

7. Dispositif selon revendication 5, caractérisé par le fait que l'intervalle entre la tangente horizontale inférieure au galet palpeur (28) et le bord supérieur de la tringle de retenue (29) est plus petit que l'épaisseur de deux plaques superposées (30).

8. Dispositif selon revendication 6 ou 7, caractérisé par le fait que le galet palpeur (28) et la tringle de retenue (29) sont réalisés sensiblement avec la même largeur.

9. Dispositif selon l'une des revendications 1 à 8, caractérisé par le fait que le dispositif (35) pour mener aux opérations d'usinage suivantes des plaques prélevées (30) présente des galets de transport (20) prévus à côté de l'extrémité supérieure (33) du magasin (31) et attaquant les plaques (30) par les deux côtés, et présente des ventouses (23) mobiles dans le plan de prélèvement.

10. Dispositif selon revendication 9, caractérisé par le fait que les ventouses (23) sont fixées à un organe transporteur (22) à circulation sans fin.

11. Dispositif selon revendication 9 ou 10, caractérisé par le fait que des ventouses (23) rassemblées à chaque fois en groupe attaquent une plaque (30).

12. Dispositif selon revendication 10 ou 11, caractérisé par le fait qu'une chambre à dépression (24) est conjuguée à la bande transporteuse (22) à laquelle les ventouses (23) sont fixées, dans la région (45) dans laquelle elles prennent les plaques (30), et par le fait que les ventouses (23) sont en communication avec la chambre à dépression (24), au travers de l'organe transporteur (22), jusqu'au point de dépôt.

13. Dispositif selon l'une des revendications 10 à 12, caractérisé par le fait que le point de dépôt (46), pour déposer les plaques (30) saisies par les ventouses (23), est conjugué à au moins une chambre de surpression (25), et par le fait que les ventouses (23) communiquent avec la chambre de surpression (25) au travers de l'organe transporteur (22).

14. Dispositif selon revendications 12 et 13, caractérisé par le fait que la chambre à dépression (24) s'étend sur toute la région dans laquelle des ventouses (23) tiennent des plaques (30), par le fait que la chambre à surpression (25) au nombre d'au moins une est disposée à l'intérieur de la chambre à dépression (24) et par le fait que les bords des chambres (24, 25) ouvertes vers le bas, tournés vers l'organe transporteur (22), sont conjugués de manière étanche à l'organe transporteur (22).

15. Dispositif selon l'une des revendications 9 à 14, caractérisé par le fait qu'entre la région (45) dans laquelle des ventouses (23) saisissent des plaques (30) et les galets transporteurs (20), il est prévu, pour les plaques (30), un rouleau d'appui entraînable (21).

16. Dispositif selon l'une des revendications 1 à 15, caractérisé par le fait qu'un transporteur horizontal (36, 2) est prévu pour le chargement du magasin (31) avec des paquets (3) de plaques.

17. Dispositif selon revendication 16, caractérisé par le fait que le point de dépôt du transporteur horizontal (36, 2) est situé dans la région des organes de levage (14).

18. Dispositif selon l'une des revendications 1 à 17, caractérisé par le fait qu'il est prévu, à l'extrémité supérieure du magasin (31), un capteur décelant la présence d'une plaque (30) et commandant l'entraînement (12, 13) des organes de levage (14) de manière telle qu'après l'enlèvement d'une plaque (30) de la pile (15) par le dispositif de prélèvement (34), les organes de levage (14) maintenant la pile (15) de plaques sont levés d'un pas correspondant à une épaisseur de plaque, de sorte que la plaque (30) se trouvant être la plaque supérieure est à chaque fois dans la position de prélèvement.

19. Dispositif selon l'une des revendications 1 à 18, caractérisé par le fait qu'en dessous du point de dépôt (46) du dispositif (35), il est prévu un transporteur linéaire (27) pour plaques (30) dégroupées, afin de les amener aux opérations d'usinage suivantes.
